# FASCICULE DE BREVET EUROPEEN

(11) **EP 0 504 076 B1**
(45) Date de publication et mention de la délivrance du brevet: **05.07.1995**
(21) Numéro de dépôt: 92420070.2
(22) Date de dépôt: 11.03.1992
(51) Int. Cl.: A01K 1/00, A01K 1/02

(54) **Abri pour l'élevage des porcs en semi-liberté**
Schutzraum für Schweinezucht in semi-Freilauf
Shelter for raising pigs in semi free-range conditions

(30) Priorité: 11.03.1991 FR 9103143
(43) Date de publication de la demande: 16.09.1992
(73) Titulaire: Gibelin, Jean-Marie, F-43100 Cohade (FR)
(72) Inventeur: Gibelin, Jean-Marie, F-43100 Cohade (FR)
(74) Mandataire: Chanet, Jacques

(56) Documents cités:
- FR-A- 1 333 330
- GB-A- 1 985
- US-A- 2 722 910
- US-A- 2 740 379
- US-A- 3 172 392

## Description

L'invention est du domaine de l'élevage et, plus particulièrement, du domaine des logements pour animaux, et elle a pour objet un abri pour les porcs.

Des loges à porcs, dites soues, sont couramment situées attenantes au bâtiment domestique des éleveurs. Dans ce cas, les animaux sont élevés dans un environnement artificiel. Or, la condition de vie des animaux a des conséquences directes sur leurs comportements et, à travers, sur le goût et/ou la qualité de leur viande.

On connaît des structures pour l'élevage et la mise à bas des porcs en plein air, telle que celle décrite par la publication du Brevet FR-A-1 333 330 et qui montre les caractéristiques du préambule de la revendication 1.

Malgré les avantages que représentent de telles structures par rapport à l'Art Antérieur sur l'amélioration de l'environnement vital des animaux, celles-ci ne sont pas satisfaisantes à la connaissance de la présente Demanderesse : les animaux ne retrouvant pas un habitat sauvage, leurs comportements en est affecté, entraînant une présence humaine, telle que l'intervention d'un vétérinaire, fréquente et indispensable.

Le but de la présente invention est de proposer un abri destiné à l'élevage des porcs en stabulation libre, reproduisant le plus fidèlement possible l'abri naturel des porcins, afin qu'ils puissent mettre bas et être élevés avec une intervention humaine minimale et ainsi avoir un comportement satisfaisant dans un environnement le plus adapté à l'amélioration de la qualité de leur viande.

Selon l'invention, un abri destiné à l'élevage en stabulation libre des porcs, est principalement caractérisée en ce qu'elle est constituée en premier lieu d'un cylindre formé à partir d'une tôle ondulée parallèlépipédique recourbée de matière rigide, telle qu'acier, résine, les ondulations étant parallèles au sol, en deuxième lieu d'un plafond constitué d'un disque de matière rigide, logeant à l'intérieur de l'enfoncement circulaire formé par la vague saillante de la tôle ondulée la plus proche de l'orifice supérieur du cylindre, le dit plafond étant d'un diamètre correspondant et de préférence en bois, et en troisième lieu d'une toiture composée d'un matelas de paille reposant sur le plafond et recouvert d'une bâche d'une matière imperméable telle que matière plastique souple, toile goudronnée ; d'où il résulte d'une part, que la conformation ondulée de la paroi du cylindre, les ondulations étant parallèles au sol, confèrent sa rigidité à l'abri vis-à-vis de sollicitations dans le plan horizontal et, d'autre part, que la toiture, de par sa conformation et sa composition, est thermiquement isolante et étanche.

La tôle ondulée est de préférence maintenue sous la forme d'un cylindre au moyen d'un lien ou cordon qui l'enserre, le dit cordon étant situé à l'extérieur et logé dans l'un des creux formés par les vagues de la tôle ondulée ; avantageusement le cordon peut passer dans un ourlet périphérique de la bâche.

Selon une forme préférée de réalisation, l'abri comporte une ouverture ménagée dans la demi partie inférieure du dit cylindre et pratiquée de part et d'autre des bords jointifs de la tôle ondulée, de telle sorte que la dite ouverture ne constitue pas une discontinuité supplémentaire du cylindre. Un rideau de matière souple, telle que matière plastique, comportant une pluralité de fentes suivant sa hauteur, obstrue la dite ouverture de manière pendante et comporte un ourlet de passage du cordon qui le maintient devant l'ouverture.

Préférentiellement, l'abri comporte sensiblement en son mitan, un nid à porcelets formé d'une cloison courbe disposée parallèlement à la paroi du cylindre, la face convexe étant en regard de l'ouverture.

Selon une forme préférée de réalisation, la hauteur totale de l'abri est comprise entre 1,20 m et 1,80 m, la hauteur du cylindre est comprise entre 1 m et 1,40 m, la hauteur de l'ouverture est comprise entre 0,80 m et 1,20 m et le diamètre extérieur de l'abri est compris entre 2 m et 4 m.

La présente invention sera mieux comprise et des détails en relevant apparaîtront à la description qui va être faite d'une forme préférée de réalisation, en relation avec les figures de la planche annexée, dans laquelle :
La fig.1 est une vue en perspective éclatée d'un abri selon l'invention,
La fig.2 est une vue en perspective du même abri,
La fig.3 est une représentation schématique vue de dessus de l'abri avec une truie et ses petits.

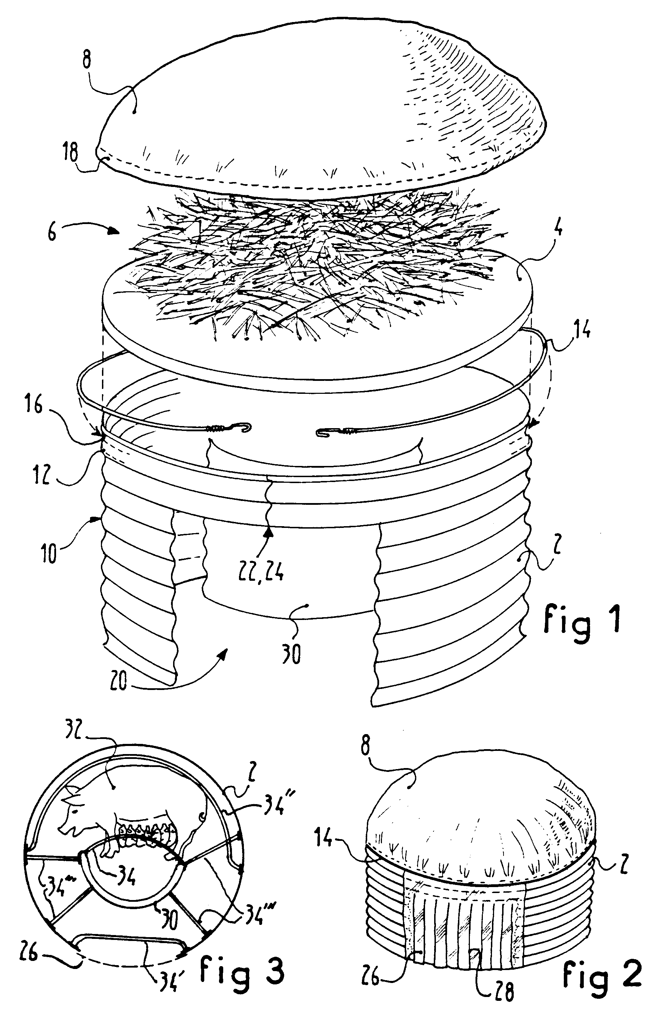

Sur la fig.1, un abri selon l'invention est principalement constitué d'un cylindre 2 en tôle ondulée, d'un plafond 4 en bois aggloméré et d'une toiture composée d'un matelas 6 de paille reposant sur le plafond 4 et recouvert d'une bâche 8 en matière imperméable.

La tôle ondulée est recourbée jusqu'à former le cylindre 2, les ondulations 10 étant parallèles au sol afin d'une part, de lui conférer de la rigidité dans le plan horizontal et d'autre part, de mettre à profit les reliefs de la tôle comme un moyen de prise pour d'autres éléments constitutifs de l'abri.

Le plafond 4 est encastré dans le creux circulaire 12 formé entre deux vagues saillantes de la tôle ondulée, le diamètre du plafond 4 déterminant le diamètre du cylindre 2 en constituant un gabarit de la forme cylindrique de l'abri.

Un cordon 14, qui maintient la tôle ondulée dans sa conformation, est logé sur la surface extérieure du cylindre 2 à l'intérieur d'un enfoncement 16 circulaire formé par la vague de la tôle ondulée débouchante sur l'orifice supérieur de celui-ci.

Le matelas 6 de paille de la toiture, d'une part isole thermiquement l'abri et, d'autre part, confère une forme bombée à la bâche 8 propre à assurer l'écoulement de l'eau de pluie sur son poussoir de l'abri. La bâche 8 est maintenue dans sa position au moyen du même cordon 14 qui reserre contre le plafond, la bâche 8 a de préférence un ourlet 18 de passage du dit cordon.

Une ouverture 20 est ménagée dans la demi partie inférieure du cylindre 2, afin de permettre l'accès à l'intérieur de l'abri. L'ouverture 20 est pratiquée de part et d'autre des bords 22 et 24 jointifs de la tôle ondulée, afin de limiter la discontinuité du cylindre 2.

Sur la fig.2, l'abri est représenté schématiquement tel qu'il apparaît en milieu naturel. Ce milieu est de préférence une prairie comportant des boquetaux, sous-bois, où sont répartis une pluralité d'abris.

L'abri est équipé d'un rideau 26 de matière souple, telle que matière plastique, comportant une pluralité de fentes 28 suivant sa hauteur. Le rideau 26 qui peut comporter un ourlet de passage du cordon 14, est maintenu de manière pendante devant l'ouverture 20.

Sur la fig.3, une cloison 30 courbe est disposée au mitan de l'abri parallèlement au cylindre 2, la face convexe étant en regard de l'ouverture 20. La truie 32 est blottie contre la paroi du cylindre 2, ses petits étant protégés du froid d'une part, par leur mère et, d'autre part, par la cloison 30 courbe qui constitue un paravent devant l'ouverture 20.

Toujours sur la fig.3, une forme perfectionnée de réalisation de l'abri, dite de maternité, comporte un certain nombre de rampes sensiblement horizontales disposées à une vingtaine de centimètres du sol ; ces rampes sont destinées soit à imposer à la truie allaitante une place d'allaitement au fond de l'abri, soit à lui éviter d'écraser les petits lorsqu'elle se couche ou se déplace, soit à éviter des sorties trop faciles de ces derniers ; en outre ces rampes, qui sont fixées aux parois de l'abri et de la cloison, contribuent à la rigidité de l'ensemble. On remarque sur la figure : une rampe 34, qui forme un portique de protection à d'entrée de la cloison 30 de nidification, une rampe de porte 34′, une rampe de paroi de fond 34˝ et des rampes traversantes 34‴.

## Revendications

1. Abri destiné à l'élevage en milieu naturel d'animaux, tels que porcins, du type de ceux principalement composés d'une paroi verticale globalement cylindrique et d'une toiture, caractérisé :
en ce que la dite paroi est formée d'au moins une tôle ondulée, les ondulations (10) étant parallèles au sol ;

2. Abri selon la revendication 1 caractérisé :
en ce que la dite tôle ondulée au moins est recourbée pour former un cylindre (2) ;

3. Abri selon la revendication 2, caractérisé :
en ce qu'il comporte une ouverture (20) ménagée au moins dans la demi-partie inférieure du dit cylindre (2) ;

4. Abri selon la revendication 2, caractérisé :
en ce qu'il comporte, sensiblement en son mitan, un nid à porcelets formé d'une cloison (30) courbe disposée parallèlement à la paroi du cylindre (2), la face convexe étant en regard de l'ouverture (20) ;

5. Abri selon la revendication 1 caractérisé :
en ce que la dite toiture comprend un disque de matière rigide (4), dit plafond ;

6. Abri selon la revendication 5 caractérisé :
en ce que la dite toiture comprend un matelas de paille (6), celui-ci reposant sur le plafond et étant recouvert d'une bâche (8) d'une matière imperméable ;

7. Abri selon la revendication 5 caractérisé :
en ce que le plafond (4) est encastré dans un creux (12) formé entre deux vagues (10) saillantes de la tôle ondulée ;

8. Abri selon la revendication 6, caractérisé :
en ce que la bâche (8) comporte un ourlet (18) de passage d'un cordon (14) qui la maintient en position tendue, le dit cordon (14) étant logé à l'extérieur de l'abri dans l'un des creux formés entre deux vagues (10) de la tôle ondulée ;

9. Abri selon les revendications 3 et 8 caractérisé :
en ce qu'un rideau (26) de matière souple, comportant une pluralité de fentes (28) suivant sa hauteur, obstrue la dite ouverture (20) de manière pendante, le dit rideau (26) comportant un ourlet de passage du cordon (14) qui le maintient devant l'ouverture (20) ;

10. Abri selon la revendication 8, caractérisé :
en ce que la tôle ondulée est maintenue sous la forme d'un cylindre (2) au moyen du dit cordon (14) qui l'enserre ;

## Claims

1. Breeding shelter in natural environment of animals, such as piglets, of the type of those mainly comprising a vertical wall globally cylindrical and a roof, characterised :
in that the said wall is formed by at least one corrugated metal sheet, the corrugations (10) being parallel to the ground ;

2. Shelter according to claim 1, characterised :
in that the said corrugated metal sheet at least is curved to form a cylinder (2) ;

3. Shelter according to claim 2, characterised :
in that it has an opening (20) provided in the lower half of the said cylinder (2) ;

4. Shelter according to claim 2, characterised :
in that it has substantially in its centre, a "nest" for piglets formed by a curved partition (30) located parallel to the wall of the cylinder (2), the convex face being opposite of the opening (20) ;

5. Shelter according to claim 1, characterised :
in that the said roof comprises a disc of rigid material (4), said roof ;

6. Shelter according to claim 5, characterised :
in that the said roof comprises a bed (6) of straw, this one resting on the ceiling (4) and being covered by a sheet (8) of a waterproof material ;

7. Shelter according to claim 5, characterised :
in that the ceiling (4) is sunk into a recess (12) formed by two projecting waves of the corrugated metal sheet ;

8. Shelter according to claim 6, characterised :
in that the sheet (8) has an eyelet (18) for the rope (14) to pass through, keeping it taut, the said rope (14) being located outside the shelter in one of the recesses formed between two waves (10) of the corrugated metal sheet.

9. Shelter according to claims 3 and 8 characterised :
in that a curtain (26) of flexible material, having a plurality of slits (28) according to its height, hangs across the said opening (20) obstructing it, the said curtain (26) having an eyelet for the rope (14) to pass through so keeping it in front of the opening (20) ;

10. Shelter according to claim 8, characterised :
in that the corrugated metal sheet is kept in the shape of a cylinder (2) by means of a rope (14) holding it tight.

## Patentansprüche

1. Schutzraum für die Aufzucht von Tieren, wie Schweinen in natürlicher Umgebung, von jener Bauart, die im wesentlichen eine vertikale, insgesamt zylindrische Wand und ein Dach aufweist, dadurch gekennzeichnet, daß die Wand aus wenigstens einem Wellblech gebildet ist, und daß die Wellen (10) parallel zum Boden verlaufen.

2. Schutzraum nach Anspruch 1, dadurch gekennzeichnet, daß das Wellblech gekrümmt ist, um einen Zylinder (2) zu bilden.

3. Schutzraum nach Anspruch 2, dadurch gekennzeichnet, daß dieser eine Öffnung (20) aufweist, die wenigstens im unteren Teil des Zylinders (2) vorgesehen ist.

4. Schutzraum nach Anspruch 2, dadurch gekennzeichnet, daß dieser im wesentlichen in seiner Mitte ein Ferkelnest aufweist, gebildet aus einer gekrümmten Trennwand (30), die parallel zur Wand des Zylinders (2) angeordnet ist, und daß die konvexe Seite der Öffnung (20) zugewandt ist.

5. Schutzraum nach Anspruch 1, dadurch gekennzeichnet, daß das Dach eine Scheibe aus starrem Material (4) umfaßt, der sogenannten Decke.

6. Schutzraum nach Anspruch 5, dadurch gekennzeichnet, daß das Dach eine Strohmatte (6) aufweist, die auf der Decke ruht und mit einer Plane (8) aus undurchlässigem Material abgedeckt ist.

7. Schutzraum nach Anspruch 5, dadurch gekennzeichnet, daß die Decke (4) in einen Hohlraum (12) eingelassen ist, der zwischen zwei vorspringenden Wellen des Wellbleches gebildet ist.

8. Schutzraum nach Anspruch 6, dadurch gekennzeichnet, daß die Plane (8) einen Hohlsaum (18) zum Hindurchführen eines Seiles (14) aufweist, der sie in gespanntem Zustand hält, und daß das Seil (14) außerhalb des Schutzraumes in einem der Hohlräume untergebracht ist, die zwischen zwei Wellen (10) des Wellbleches gebildet ist.

9. Schutzraum nach den Ansprüche 3 und 8, dadurch gekennzeichnet, daß ein Vorhang (26) aus weichem Material mit einer Mehrzahl von Schlitzen (28) in der Richtung seiner Höhe die Öffnung (20) hängend bedeckt, und daß der Vorhang (26) einen Hohlsaum für das Seil aufweist, das ihn vor der Öffnung (20) hält.

10. Schutzraum nach Anspruch 8, dadurch gekennzeichnet, daß sein Wellblech mittels des genannten Seiles (14), das ihn umspannt, in der Gestalt eines Zylinders (2) gehalten ist.
